(19) Europäisches Patentamt
European Patent Office
Office européen des brevets

(11) EP 0 774 849 B1

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(51) Int Cl.:
***H04L 25/40*** *(2006.01)*

(21) Anmeldenummer: **96810751.6**

(22) Anmeldetag: **07.11.1996**

(54) **Verfahren zum Übertragen von binären, asynchronen Daten über einen synchronen Kanal**
Method for the transmission of binary, asynchronous data over a synchronous channel
Procédé de transmission de données binaires, asynchrones, sur un canal synchrone

(84) Benannte Vertragsstaaten:
**DE ES FI FR IT**

(30) Priorität: **16.11.1995 DE 19542715**

(43) Veröffentlichungstag der Anmeldung:
**21.05.1997 Patentblatt 1997/21**

(73) Patentinhaber: **ABB Schweiz AG**
**5400 Baden (CH)**

(72) Erfinder: **Scherwey, Roland**
**1734 Tentlingen (CH)**

(74) Vertreter: **ABB Patent Attorneys**
**c/o ABB Schweiz AG**
**Brown Boveri Strasse 6**
**5400 Baden (CH)**

(56) Entgegenhaltungen:
**US-A- 5 054 020**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 774 849 B1

## Beschreibung

### Technisches Gebiet

Die Erfindung bezieht sich auf das Gebiet der Datenübertragungstechnik. Sie geht aus von einem Verfahren zum Übertragen von binären, asynchronen Daten, mit einer Datenwortbreite von N Bit, von einem Sender über einen synchronen Kanal zu einem Empfänger gemäss dem Oberbegriff des ersten Anspruchs.

### Stand der Technik

Ein solches Verfahren wird zum Beispiel im Buch "Data Communications, Computer Networks and Open Systems" von Fred Halsall, Addison-Wesley Publishing Company, 1992, auf den Seiten 73-142 beschrieben. Bei der Übertragung von asynchronen Daten von einem Sender über einen synchronen Kanal zu einem Empfänger müssen die Daten auf den Takt des selbständig arbeitenden Kanals, z.B. eines PCM Netzes, synchronisiert werden. Eine erste Möglichkeit besteht darin, die asynchronen Daten mit einer festen Frequenz abzutasten und die auf diese Weise erhaltenen Werte synchron zu übertragen. Diese Methode hat jedoch den Nachteil, dass die isochrone Verzerrung mit steigender Baudrate grösser wird. Eine zweite Möglichkeit besteht darin, die asynchronen Daten mit einem UART (Universal Asynchronous Receiver/Transmitter) zu bearbeiten und die bearbeiteten Daten z.B. auf einen synchronen 64 kbit/s Kanal auszugeben. Für niedrige Baudraten stellt dies kein Problem dar, da die Daten ohne grossen Kodierungsaufwand auf einem Kanal höherer Bitrate ausgegeben werden können. Es ist jedoch nicht möglich, asynchrone Daten mit einer Baudrate von bis zu oder sogar von mehr als der Bitrate des synchronen Kanals zu übertragen.

Die Patentschrift US 5 045 020 A offenbart ein Verfahren zum Übertragen von binären, asynchronen 8-bit Daten von einem Sender über eine synchronen Kanal zu einem Empfänger. Start und Stopbit werden vor dem Senden entfernt, die 8-bit Daten werden auf Rahmen aufgeteilt, die 8 Bit Breite und 24 Rahmenwörter Länge haben. 2 Bit jedes Rahmenwortes sind für Steuerzwecke reserviert. Im Sender wird ein Sendezähler, dessen Wert einer Anzahl von zu übertragenden 8-bit Daten entspricht, unterhalten und in einem Steuerwort mit übertragen. Bei der Decodierung im Empfänger wird ein Empfangszähler unterhalten, dessen Wert auf den Wert des Sendezählers abgestimmt wird.

### Darstellung der Erfindung

Aufgabe der vorliegenden Erfindung ist es deshalb, ein Verfahren zum Übertragen von binären, asynchronen Daten, mit einer Datenwortbreite von N Bit inklusive allfälliger Parity Bits, von einem Sender über einen synchronen Kanal zu einem Empfänger anzugeben, mittels welchem die asynchronen Daten mit einer Baudrate von bis zu X Kilobaud mit einer minimalen Verzögerung auf einem synchronen Kanal mit einer Kapazität von X kBit/s übertragen werden können.

Diese Aufgabe wird bei der eingangs genannten Art durch die Merkmale des ersten Anspruchs gelöst.

Asynchrone Daten umfassen eine Anzahl von Datenbits (= ein Datenwort), welche von vorzugsweise einem Start- und einem Stopbit eingefasst sind. Kern der Erfindung ist es nun, dass die Datenwörter aus den asynchronen Daten extrahiert werden. Anschliessend werden die Datenwörter codiert, indem sie auf zu übertragende Rahmenwörter eines Rahmens aufgeteilt werden. Genan ein Bit des Rahmens dient der Unterscheidung von Rahmen- und Steuerwörtern. Da also pro Rahmenwort - je nach Anzahl Datenbits - kein vollständiges, ein vollständiges oder mehrere Datenwörter übermittelt werden können, wird ausserdem ein Sendezähler, dessen Wert der Anzahl gesendeter Rahmenwörter entspricht, erzeugt und zyklisch mitgesendet. Im Empfänger wird bei der Decodierung der Datenwörter ein Empfangszähler unterhalten, dessen Wert dauernd mit dem Wert des übertragenen Sendezählers synchronisiert wird. Sende-/Empfangszähler dienen somit der Abstimmung des Empfängers auf den Sender, so dass die Datenwörter fehlerfrei decodiert werden können.

Vorteilhaft an der Erfindung ist insbesondere, dass die Übertragungskapazität des Kanals nahezu vollständig ausgenützt werden kann und lediglich eine minimale Übertragungsverzögerung der Daten entsteht.

### Kurze Beschreibung der Zeichnungen

Nachfolgend wird die Erfindung anhand von Ausführungsbeispielen im Zusammenhang mit den Zeichnungen näher erläutert.

Es zeigen:

**Fig. 1** Eine Anordnung von mehreren Computern, welche über einen synchronen Kanal verbunden sind, für welche Anordnung das erfindungsgemässe Verfahren zur Übertragung von asynchronen Daten zwischen den Computern geeignet ist;

**Fig. 2** Ein Beispiel der Codierung von 8 Bit langen Datenwörtern nach dem erfindungsgemässen Verfahren mit Paritybit (N=9);

**Fig. 3** Ein Beispiel der Codierung von 8 Bit langen Datenwörtern nach dem erfindungsgemässen Verfahren ohne Paritybit (N=8);

**Fig. 4** Ein Zustandsdiagramm für den Sendevorganges des erfindungsgemässen Verfahrens;

**Fig. 5** Ein Zustandsdiagramm für den Empfangsvorganges des erfindungsgemässen Verfahrens;

**Fig. 6-10** Weitere Beispiele von Rahmen mit N=6,5,4,3,2;

**Fig. 11** Ein Darstellung eines ansynchronen Datenworts.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

**Wege zur Ausführung der Erfindung**

Figur 1 zeigt eine Anordnung mit mehreren Computern, welche über einen Kanal 3 miteinander verbunden sind. Sollen Daten von einem Computer zu einem anderen übermittelt werden, so ist ein Computer als Sender 1 und der andere als Empfänger 2 tätig. Beim Kanal 3 kann es sich beispielsweise um ein PCM-Netz handeln. Der Kanal arbeitet dann für sich und unabhängig vom Sender oder Empfänger in einem eigenen Takt. Man spricht von einem synchronen Kanal. Die zu übertragenden asynchronen Daten treten unabhängig vom Arbeitstakt des Kanals auf. Asynchrone Daten umfassen ein Datenwort mit einer Datenwortlänge von N Bits inklusive allfälliger Parity Bits. Das Datenwort ist von Start- und Stopbits eingefasst (siehe Figur 11). Üblicherweise werden ein Start- und 1, 1.5 oder 2 Stopbits verwendet. Diese Daten müssen auf den Takt des Kanals synchronisiert werden. Bildlich gesprochen muss ein Verfahren vorgesehen werden, mittels welchem die Daten vom Kanal periodisch abgeholt werden können.

Nach dem Stand der Technik ist es nun nicht möglich, asynchrone Daten von einem Computer zum anderen mit einer Baudrate von bis zu oder sogar mehr als der Bitrate des als Übertragungsmedium dienenden synchronen Kanals zu übertragen. Durch die Übertragung von Start- und Stopbits geht Übertragungsbandbreite verloren. Die Problematik existiert nicht nur bei dem oben genannten Beispiel mit über ein PCM-Netz verbundenen Computern, sondern ganz allgemein bei jedem Übertragungssystem für asynchrone Daten mit einem Sender, einem Empfänger und einem synchronen Kanal.

Nach dem erfindungsgemässen Verfahren wird eine Übertragungsrate von bis zu oder sogar mehr als X Baud bei einer Bandbreite von X Bit/s des synchronen Kanals dadurch erreicht, dass die Datenwörter mit einer Datenwortbreite von N Bit aus den asynchronen Daten extrahiert und bei der Codierung auf einen Rahmen mit einer Rahmenbreite von M Bits aufgeteilt werden. Zur Extraktion der Datenwörter werden die Start- und Stopbits der asynchronen Daten unterdrückt. Bei der Codierung entstehen sogenannte Rahmenwörter. Ein Bit des Rahmens, vorzugsweise das MSB, dient der Unterscheidung von Rahmenwörtern und Steuerwörtern. Die so gebildeten Rahmenwörter werden dann im Takt des synchronen Kanals übertragen. Es wird also immer ein Rahmen- oder ein Steuerwort pro Taktperiode des Kanals übertragen.

Figur 3 zeigt ein Beispiel mit 8 Bit breiten Datenwörtern (D0...D7, N=8). Diese werden auf einen Rahmen von 8 Bits aufgeteilt (M=8). Figur 2 zeigt den entsprechenden Fall mit einem zusätzlichen Paritybit P (N=8). Da die Rahmenbreite kleiner (N=9, M=8), gleich (N=M=8) oder grösser (N=7,6,5,..., M=8) als die Datenwortbreite inklusive allfälliger Parity Bits ist, müssen die Datenbits eines Datenworts entweder auf mehrere Rahmenwörter (N=8,9) aufgeteilt werden oder die Bits eines Rahmenworts mit den Bits von mehreren Datenwörtern aufgefüllt werden (N<=6). Die Aufteilung der Datenbits verschiebt sich damit von Rahmenwort zu Rahmenwort. Eine Ausnahme bildet der Fall mit N=7, bei welchem ein Datenwort genau auf ein Rahmenwort passt.

Wegen dieser veränderlichen Aufteilung der Datenbits auf die Rahmenbits wird ein Sendezähler erzeugt, dessen Wert zur Synchronisation des Empfängers auf den Sender zyklisch mitübertragen wird. Der Wert des Sendezählers entspricht dabei der Anzahl übertragener Rahmenwörter. Im Empfänger wird ein Empfangszähler unterhalten, dessen Wert immer wieder mit dem Wert des mitübertragenen Sendezählers synchronisiert wird. Aufgrund des Standes des Empfangszählers kann im Empfänger eine fehlerlose Zuordnung der empfangenen Bits auf die Bits eines Datenworts vorgenommen werden. Auf diese Weise ist es möglich, die ursprünglichen Datenbits aus den Rahmenwörtern zu extrahieren. Zur Weiterverarbeitung können die Datenwörter beispielsweise wiederum mit Start- und Stopbit versehen werden.

Angenommen die Datenwörter weisen ein Breite von 8 Bit auf. Die Rahmenbreite sei gleich lang. Im Fall, dass kein Paritybit erzeugt wird, wiederholt sich die Aufteilung der Datenbits auf die Rahmenwörter nach 8 Zyklen. Der Rahmen weist also eine Länge von 8 auf. Im Falle eines zusätzlichen Paritybits vergrössert sich die totale Datenwortbreite auf 9. Der Sendezähler wird nun immer modulo der Rahmenlänge inkrementiert, wobei die Rahmenlänge der Anzahl Datenbits plus allfälliger Paritybits entspricht.

Die Datenwörter treten wie bereits eingangs gesagt asynchron vom Takt des synchronen Kanals und in unregelmässigen Abständen auf. Deshalb kann der Fall auftreten, dass keine weiteren Datenwörter mehr zur Übertragung anstehen, dass die Übertragung eines Datenworts aufgrund der Aufteilung auf die Rahmenwörter aber noch nicht abgeschlossen ist. Um diese Situationen im Empfänger erkennen zu können, werden zwei Steuerwörter erzeugt. Das erste davon (ST1) wird übertragen, falls die Übertragung der Datenwörter vollständig abgeschlossen ist und keine weitere Daten mehr anstehen. Der Empfänger erklärt daraufhin die letzten empfangenen Bits des vermeintlich neu empfangenen Datenworts für ungültig. Das zweite Steuerwort (ST2) wird übertragen, falls im Sender keine weiteren Datenwörter mehr anstehen, das letzte Datenwort aber noch nicht vollständig übertragen wurde. Es dient als dazu, dem Empfänger zu signalisieren, dass noch weitere Daten folgen werden. Somit wartet der Empfänger während einer weiteren Taktperiode, um eventuell verbleibende Datenbits aufzufangen.

Diese Steuerwörter eignen sich sehr gut zur Übertragung des Sendezählers. Die Steuerwörter für eine Rahmenbreite von 8 Bit können demzufolge z.B. wie folgt aufgebaut sein:

Das MSB dient der Unterscheidung von Steuerwörtern und Rahmenwörtern und ist bei den Steuerwörtern beispielsweise auf "1" gesetzt. Die ersten vier Bits vom LSB her gesehen, d.h. Bit 0..3, werden auf den Wert des Sendezählers gesetzt. Das vierte Bit ist ein Paritybit. Das fünfte Bit dient der Unterscheidung des ersten Steuerworts vom zweiten und ist bei ersten auf "0" und beim zweiten auf "1" gesetzt. Das sechste Bit ist fest auf "0" gesetzt. Dies hat den Vorteil, dass eine Unterbrechung des Kanals nicht als Steuerwort interpretiert wird. Denn bei einem PCM-Kanal wird eine Unterbrechung mit lauter "1" signalisiert ("AIS" = Alarm Indication Signal).

Im folgenden wird auf die Figuren 4 und 5 Bezug genommen, welche Zustandsdiagramme für das Sende- bzw. Empfangsprotokoll angeben. Beide Vorgänge werden mit dem Takt des synchronen Kanals synchronisiert, d.h. jede Taktperiode werden die Bedingungen überprüft, um allenfalls einen Zustand zu wechseln. Die Ausführungen basieren auf dem realisierten und erfolgreich erprobten Ausführungsbeispiel mit 8 Datenbits + 1 Paritybit (=1 Datenwort) und einer Rahmenbreite von 8 Bits.

Figur 4 zeigt das Zustandsdiagramm für das Sendeprotokoll: Mit S0 bis S3 sind vier verschiedene Zustände bezeichnet. Die Bedingung für den Übergang von einem Zustand zum anderen sind entlang der Pfeile aufgetragen. "1" bedeutet "ist erfüllt", "0" bedeutet "ist (noch) nicht erfüllt" und "X" bedeutet "spielt keine Rolle". In der Legende unten rechts der Figur sind die Bedingungen angegeben: Die erste Stelle oder "A" bedeutet: Es stehen Daten zur Übertragung an. Die zweite Stelle oder "B" bedeutet: Die Daten sind vollständig übertragen worden.

Zustand 0 (S0): In diesem Zustand wird das erste Steuerwort ST1 mit dem aktuellen Sendezählerstand gesendet. Falls keine Daten zur Übertragung auftreten, bleibt der Sender in diesem Zustand. Falls Daten zur Übertragung aufgetreten sind, wird in den Zustand S1 gewechselt.

Zustand 1 (S1): Es sind Daten aufgetreten oder es sind noch weitere Daten zu senden. Somit werden die zu sendenden Datenwörter je nach Sendezähler in Rahmenwörter eingepasst und gesendet. Falls der Sendezähler kleiner als die Rahmenlänge ist wird er inkrementiert, andernfalls auf Null gesetzt (modulo-Funktion). Falls weiterhin Daten anstehen und diese noch nicht vollständig übertragen worden sind, bleibt der Sender in diesem Zustand. Stehen keine neue Daten mehr an und sind die aktuellen Daten aber noch nicht vollständig übertragen worden, so wechselt der Sender zum Zustand S2: ST2 wird übertragen. Sind keine neue Daten mehr zu übertragen und die aktuellen Daten sind bereits vollständig übertragen worden, so wechselt der Sender zurück zum Zustand S1.

Zustand 2 (S2): Es sind zum ersten Mal keine weiteren Daten mehr aufgetreten und das letzte Datenwort ist noch nicht vollständig übertragen worden. Das Steuerwort ST2 wird gesendet. Falls weitere Daten auftreten, so wird zum Zustand S1 zurückgewechselt und die Daten werden übertragen. Sind keine neuen Daten aufgetreten, so wird in den Zustand S3 gewechselt, und die noch zu übertragenden Datenbits werden abschliessend gesendet.

Zustand 3 (S3): Es sind zum zweiten Mal keine weiteren Daten mehr aufgetreten. Somit kann der Rest des aktuellen Datenwortes gesendet werden. Als nächstes muss aber auf jeden Fall das erste Steuerwort ST1 gesendet werden, es wird damit zum Zustand S0 zurückgewechselt.

Das Zustandsdiagramm des Empfangsprotokolls ist in Figur 5 dargestellt. Wiederum sind die verschiedenen Zustände mit S0 bis S3 bezeichnet. Die Bedingungen für eine Zustandswechsel sind unten rechts aufgezeigt. Die erste Stelle, A, bedeutet: Es wurden Daten oder ein Steuerwort ST1 bzw. ST2 empfangen. Die zweite Stelle, B bedeutet: Es wurde das Steuerwort ST1 oder ST2 empfangen.

Zustand 0 (S0): Es wurde das erste Steuerwort ST1 empfangen. Der Empfangszähler wird bei korrektem Paritybit mit dem im Steuerwort ST1 enthaltenen Sende-/Empfangszähler synchronisiert. Wurden keine Daten, d.h. Rahmenwörter mit einem MSB="0" empfangen, so verharrt der Empfänger im Zustand S0. Wurden hingegen Daten empfangen, so wird zum Zustand S1 gewechselt.

Zustand 1 (S1): Es wurde der erste Teil eines Datenworts empfangen. Dieses wird je nach Stand des Sende-/Empfangszählers decodiert. Bei einem Empfangszählerwert von 0 bis 3 und von 5 bis 7 wird der Empfang eines Datenworts begonnen. Empfangszählerwerte von 4 u. 8 sind in diesem Zustand nicht möglich, da in diesem Fall der Empfang eines Datenworts nicht begonnen werden kann, sondern höchstens ein Datenwort abgeschlossen oder der zweite Teil eines Datenworts empfangen werden kann, siehe Figur 2. (Im an dieser Stelle nicht betrachten Fall von 8 Datenbits ohne Parity gilt dies entsprechend für die Empfangszählerwerte von 0 bis 6 bzw. 7).Der Empfangszähler wird in jedem Fall um eins inkrementiert. Wird als nächstes ein Steuerwort und zwar ST1 empfangen, bedeutet dies, dass die Daten noch nicht vollständig übertragen worden sind und es wird in den Zustand S0 zurückgewechselt. Wird hingegen ST2 empfangen, d.h. es wurden keine neuen Daten mehr übertragen, die aktuellen sind aber noch nicht vollständig übertragen, so wird in den Zustand S3 gewechselt. Beim Empfang von weiteren Daten wird in den Zustand S2 gewechselt und die Datenwörter werden aus den Rahmenwörtern extrahiert.

Zustand 2 (S2): Es wurde ein Datenwort empfangen. Dieses wird je nach Stand des Sende-/Empfangszählers decodiert. Bei einem Empfangszählerwert von 1 bis 3 und von 5 bis 7 wird der Empfang eines Datenworts abgeschlossen und zugleich der erste Teil eines neuen Datenworts angefangen. (Im an dieser Stelle nicht betrachten Fall von 8 Datenbits ohne Parity gilt dies entsprechend für die Empfangszählerwerte von 1 bis 6). Bei Empfangszählerwerten von 0 oder 4 wird der Empfang eines Datenworts lediglich begonnen bzw. noch nicht abgeschlossen. Bei einem Empfangszählerwert von 8 wird lediglich der Empfang eines Datenwortes abgeschlossen (Im an dieser Stelle nicht betrachten Fall von 8 Datenbits ohne Parity gilt dies entsprechend für einen Empfangszählerwert von 7) Der Empfangszähler wird, falls er kleiner als die Rahmenbreite ist um eins inkrementiert, andernfalls auf Null gesetzt (modulo-Funktion). Falls weitere Daten empfangen werden, d.h. Rahmenwörter mit MSB="0", so verharrt der Empfänger im Zustand S2 und die Datenwörter werden mit Hilfe des Empfangszählers aus den Rahmenwörtern extrahiert. Wird jedoch ST1 empfangen, so wechselt der Empfänger zurück in den Zustand S0. Beim Empfang von ST2 wird in den Zustand S3 gewechselt.

Zustand 3 (S3): Es wurde das zweite Steuerwort ST2 empfangen. Da noch weitere Daten folgen werden, wird bei korrektem Paritybit nur der Empfangszähler mit dem Sendezähler des Steuerworts ST2 synchronisiert. Werden diese Daten tatsächlich empfangen, so wird in den Zustand S2 zurückgewechselt und die Daten extrahiert. Falls keine Daten mehr auftreten, wird in den Zustand S0 zurückgewechselt und das eventuell neu angefangene Datenwort für nichtig erklärt.

Diese Protokolle können entweder hardwaremässig in einer logischen Schaltung oder softwaremässig realisiert werden.

Mit dem gewählten Codierungsverfahren, einer Signalisierungsrate von z.B. 1kBit/s (für die Steuerwörter) und einer Bandbreite von 64kBit/s des Kanals erhält man die folgende maximale ausnützbare Kanalbandbreite:

$$\frac{7\,Nutzbits}{8\,Bit} * Bandbreite - Signalisierungsbandbreite = \frac{7}{8} * 64kBit/s - 1kBit/s = \underline{\underline{55kBit/s}}$$

Die mit erfindungsgemässen Codierungsverfahren nutzbare Baudrate der asynchronen Daten hängt von der Datenwortbreite (N Bit) und der Art der Einpassung in die asynchronen Daten ab (Anzahl Stopbits).

$$\max.Baudrate = nutzbareBitrate * \frac{Bitzahl\,N + Start\,Bit + N\,Stopbits}{Bitzahl\,N}$$

Die folgende Tabelle gibt Aufschluss über die maximale Baudrate der asynchronen Daten:

| Bitzahl N | Max. Baudrate bei 1 Stopbit | Max. Baudrate bei 1.5 Stop-bits | Max. Baudrate bei 2 Stopbits |
|---|---|---|---|
| 9 | 67222 | 70278 | 73333 |
| 8 | 68750 | 72188 | 75625 |
| 7 | 70714 | 74643 | 78571 |
| 6 | 73333 | 77917 | 82500 |
| 5 | 77000 | 82500 | 88000 |
| 4 | 82500 | 89375 | 96250 |
| 3 | 91667 | 100833 | 110000 |
| 2 | 110000 | 123750 | 137500 |

Mit dem gewählten Codierungsverfahren, einer Signalisierungsrate von z.B. 1kBit/s und einer Bandbreite von 56kBit/s des Kanals beträgt die maximale ausnützbare Kanalbandbreite:

$$\frac{7\,Nutzbits}{8\,Bit} * Bandbreite - Signalisierungsbandbreite = \frac{7}{8} * 56kBit/s - 1kBit/s = \underline{\underline{49kBit/s}}$$

Die mit diesem Codierungsverfahren nutzbare Baudrate der asynchronen Daten hängt von der Datenwortbreite (N Bit) und der Art der Einpassung in die asynchronen Daten ab (Anzahl Stopbits).

$$\max.Baudrate = nutzbareBitrate * \frac{Bitzahl\,N + Start\,Bit + N\,Stopbits}{Bitzahl\,N}$$

Die folgende Tabelle gibt Aufschluss über die maximale Baudrate der asynchronen Daten:

| Bitzahl N | Max. Baudrate bei 1 Stopbit | Max. Baudrate bei 1.5 Stop-bits | Max. Baudrate bei 2 Stopbits |
|---|---|---|---|
| 9 | 59889 | 62611 | 65333 |
| 8 | 61250 | 64313 | 67375 |

(fortgesetzt)

| Bitzahl N | Max. Baudrate bei 1 Stopbit | Max. Baudrate bei 1.5 Stop-bits | Max. Baudrate bei 2 Stopbits |
|---|---|---|---|
| 7 | 63000 | 66500 | 70000 |
| 6 | 65333 | 69417 | 73500 |
| 5 | 68600 | 73500 | 78400 |
| 4 | 73500 | 79625 | 85750 |
| 3 | 81667 | 89833 | 98000 |
| 2 | 98000 | 110250 | 122500 |

**Bezugszeichenliste**

| | |
|---|---|
| 1 | Sender |
| 2 | Empfänger |
| 3 | synchroner Kanal |
| D0..D7 | Datenbits |
| P | Paritybit |
| ST1 | Steuerwort 1 |
| ST2 | Steuerwort 2 |
| S0..S3 | Zustände 0..3 |

**Patentansprüche**

1. Verfahren zum Übertragen von binären, asynchronen Daten von einem Sender über einen synchronen Kanal zu einem Empfänger, wobei die Daten mindestens ein Datenwort mit einer Datenwortbreite von N Bit umfassen, das Datenwort von Start- und Stopbits eingefasst ist, und die Datenwörter im Sender codiert und im Empfänger decodiert werden und die Codierung bzw. Decodierung mittels mitübertragenen Steuerwörtern gesteuert wird, wobei

   - die Datenwörter aus den asynchronen Daten extrahiert werden;
   - die Datenwörter bei der Codierung im Sender auf zu übertragende Rahmenwörter eines Rahmens mit einer Rahmenbreite von M Bits und einer Rahmenlänge von N Rahmenwörtern aufgeteilt werden, wobei genan ein Bit der Rahmenwörter zur Unterscheidung der Rahmenwörter von den Steuerwörtern verwendet wird;
   - im Sender ein Sendezähler unterhalten und zyklisch mitübertragen wird, dessen Wert einer Anzahl von übertragenen Rahmenwörtern entspricht;
   - bei der Decodierung im Empfänger ein Empfangszähler unterhalten wird, dessen Wert auf den Wert des Sendezählers abgestimmt wird.

2. Verfahren nach Anspruch 1, wobei im Sender zwei Steuerwörter erzeugt werden, von denen das erste übertragen wird, falls die Übertragung der Rahmenwörter abgeschlossen ist, und das zweite, falls im Sender keine neuen Datenwörter anstehen, die Übertragung des aktuellen Datenworts aber noch nicht abgeschlossen ist.

3. Verfahren nach Anspruch 2, wobei die Steuerwörter mit dem Wert des Sendezählers versehen werden.

4. Verfahren nach Anspruch 3, wobei bei der Erzeugung der Steuerwörter

   - das MSB der Steuerwörter auf "1" gesetzt wird;
   - ein erstes Bit fest auf "0" gesetzt wird;
   - ein zweites Bit zur Unterscheidung des ersten vom zweiten Steuerwort verwendet wird;
   - die übrigen Bits der Steuerwörter auf den Wert des Sendezählers und eines Paritybits gesetzt werden.

5. Verfahren nach einem der Ansprüche 1 bis 4, wobei der Wert des Sendezählers modulo N erzeugt wird.

6. Verfahren nach einem der vorstehenden Ansprüche, mit den Datenwörtern ein Paritybit übertragen wird.

7. Verfahren nach einem der vorstehenden Ansprüche, bei der Extraktion der Datenwörter aus den asynchronen Daten Start- und Stopbit unterdrückt werden.

8. Verfahren nach einem der vorstehenden Ansprüche, M kleiner gleich N ist.

9. Verfahren nach einem der Ansprüche 1 bis 7 wobei M grösser N ist.

## Claims

1. Method for transmitting binary, asynchronous data from a transmitter via a synchronous channel to a receiver, wherein the data comprise at least one data word with a data word width of N bits, the, data word is bounded by start and stop bits and the data words are coded in the transmitter and decoded in the receiver and the coding and decoding, respectively, are controlled by control words also transmitted, wherein

   - the data words are extracted from the asynchronous data;
   - the data words are distributed to frame words, to be transmitted, of a frame having a frame width of M bits and a frame length of N frame words during the coding in the transmitter, wherein exactly one bit of the frame words is used for distinguishing the frame words from the control words;
   - in the transmitter, a transmit counter is maintained and cyclically also transmitted, the value of which corresponds to a number of frame words transmitted;
   - during the decoding in the receiver, a received counter is maintained, the value of which is matched to the value of the transmit counter.

2. Method according to Claim 1, wherein two control words are generated in the transmitter, the first one of which is transmitted if the transmission of the frame words is completed, and the second one of which is transmitted if no new data words are present in the transmitter but the transmission of the current data word has not yet been completed.

3. Method according to Claim 2, wherein the control words are provided with the value of the transmit counter.

4. Method according to Claim 3, wherein, in the generation of the control words,

   - the MSB of the control words is set to "1";
   - a first bit is permanently set to "0";
   - a second bit is used for distinguishing the first control word from the second;
   - the remaining bits of the control words are set to the value of the transmit counter and of a parity bit.

5. Method according to one of Claims 1 to 4, wherein the value of the transmit counter is generated modulo N.

6. Method according to one of the preceding claims, wherein a parity bit is transmitted with the data words.

7. Method according to one of the preceding claims, wherein start and stop bit are suppressed during the extraction of the data words from the asynchronous data.

8. Method according to one of the preceding claims, wherein M is less than or equal to N.

9. Method according to one of Claims 1 to 7, wherein M is greater than N.

## Revendications

1. Procédé de transmission de données binaires, asynchrones, sur un canal synchrone d'un émetteur vers un récepteur, dans lequel les données comprennent au moins un mot de données avec une longueur de mot de N bits, le mot de données est délimité par des bits de Start et de Stop, et les mots de données sont codés dans l'émetteur et décodés dans le récepteur et le codage respectivement le décodage est commandé au moyen de mots de commande transmis simultanément, dans lequel

- les mots de données sont extraits des données asynchrones ;
- les mots de données sont subdivisés lors du codage dans l'émetteur en mots de cadre d'un cadre ayant une largeur de cadre de M bits et une longueur de cadre de N mots de cadre,
- exactement un bit des mots de cadre est utilisé pour distinguer les mots de cadre des mots de commande ;
- un compteur d'émission est tenu à jour dans l'émetteur et transmis simultanément de manière cyclique, sa valeur correspondant à un nombre de mots de cadre transmis ;
- un compteur de réception est tenu à jour dans le récepteur lors du décodage, sa valeur étant ajustée à la valeur du compteur d'émission.

**2.** Procédé selon la revendication 1, dans lequel deux mots de commande sont générés dans l'émetteur, le premier étant transmis pour le cas où la transmission des mots de cadre est terminée, et le deuxième pour le cas où il ne reste plus de nouveaux mots de données dans l'émetteur mais où la transmission du mot de donnée courant n'est pas encore terminée.

**3.** Procédé selon la revendication 2, dans lequel les mots de commande sont dotés des valeurs du compteur d'émission.

**4.** Procédé selon la revendication 3, dans lequel, lors de la génération des mots de commande

- le MSB, bit le plus significatif des mots de commande est mis à "1" ;
- un premier bit est fixé à "0" ;
- un deuxième bit est utilisé pour distinguer le premier du deuxième mot de commande ;
- les bits restants des mots de commande sont mis à la valeur des compteurs d'émission et d'un bit de parité.

**5.** Procédé selon une des revendications 1 à 4, dans lequel la valeur du compteur d'émission est générée modulo N.

**6.** Procédé selon une des revendications précédentes, dans lequel un bit de parité est transmis avec les mots de données.

**7.** Procédé selon une des revendications précédentes, dans lequel les bits de Start et de Stop sont éliminés lors de l'extraction des mots de données à partir des données asynchrones.

**8.** Procédé selon une des revendications précédentes, dans lequel M est inférieur ou égal à N.

**9.** Procédé selon une des revendications 1 à 7, dans lequel M est supérieur à N.

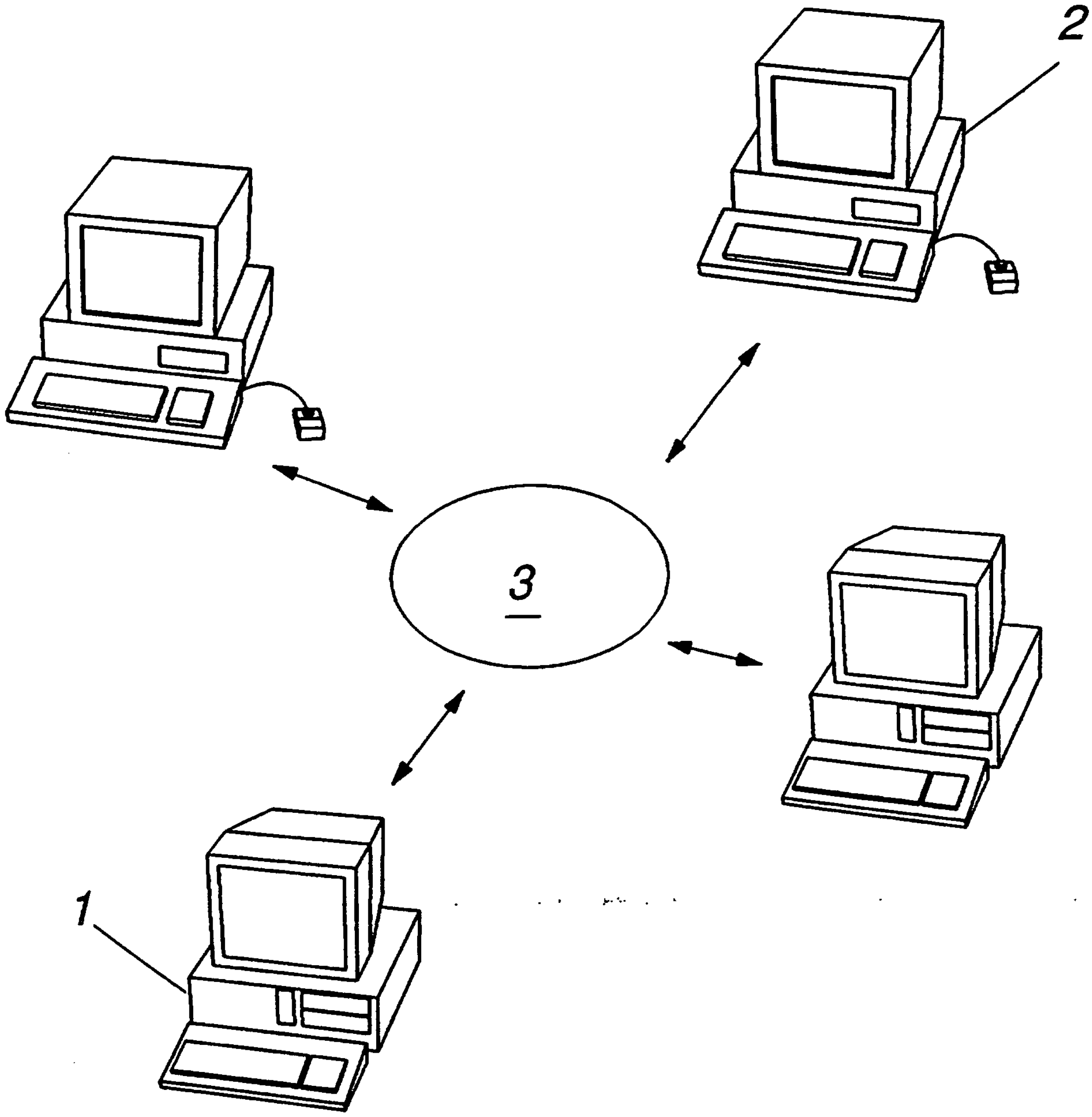


Fig.1

| | | | | | | | | |
|---|---|---|---|---|---|---|---|---|
| 8 | 0 | P | D5 | D4 | D3 | D2 | D1 | D0 |
| 7 | 0 | D7 | D6 | P | D3 | D2 | D1 | D0 |
| 6 | 0 | D7 | D6 | D5 | D4 | P | D1 | D0 |
| 5 | 0 | D7 | D6 | D5 | D4 | D3 | D2 | P |
| 4 | 0 | D7 | D6 | D5 | D4 | D3 | D2 | D1 |
| 3 | 0 | D7 | D6 | D5 | D4 | D3 | P | D0 |
| 2 | 0 | D7 | D6 | D5 | P | D2 | D1 | D0 |
| 1 | 0 | D7 | P | D4 | D3 | D2 | D1 | D0 |
| 0 | 0 | D6 | D5 | D4 | D3 | D2 | D1 | D0 |
| Bit | 7 | 6 | 5 | 4 | 3 | 2 | 1 | 0 |

*Fig. 2*

| | | | | | | | | |
|---|---|---|---|---|---|---|---|---|
| 7 | 0 | D7 | D6 | D5 | D4 | D3 | D2 | D1 |
| 6 | 0 | D7 | D6 | D5 | D4 | D3 | D2 | D0 |
| 5 | 0 | D7 | D6 | D5 | D4 | D3 | D1 | D0 |
| 4 | 0 | D7 | D6 | D5 | D4 | D2 | D1 | D0 |
| 3 | 0 | D7 | D6 | D5 | D3 | D2 | D1 | D0 |
| 2 | 0 | D7 | D6 | D4 | D3 | D2 | D1 | D0 |
| 1 | 0 | D7 | D5 | D4 | D3 | D2 | D1 | D0 |
| 0 | 0 | D6 | D5 | D4 | D3 | D2 | D1 | D0 |
| Bit | 7 | 6 | 5 | 4 | 3 | 2 | 1 | 0 |

*Fig. 3*

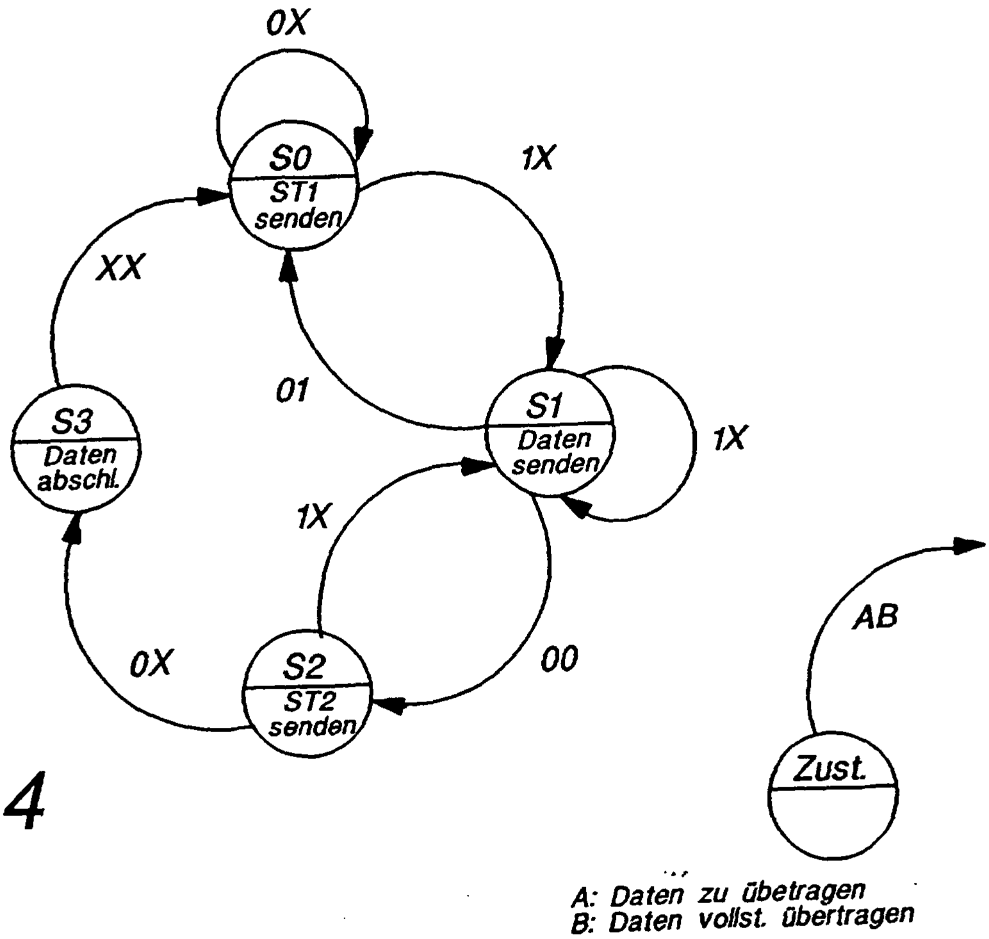
0X
S0
ST1 senden
1X
XX
01
S1
Daten senden
1X
S3
Daten abschl.
1X
0X
S2
ST2 senden
00
AB
Zust.
A: Daten zu übetragen
B: Daten vollst. übertragen

Fig.4

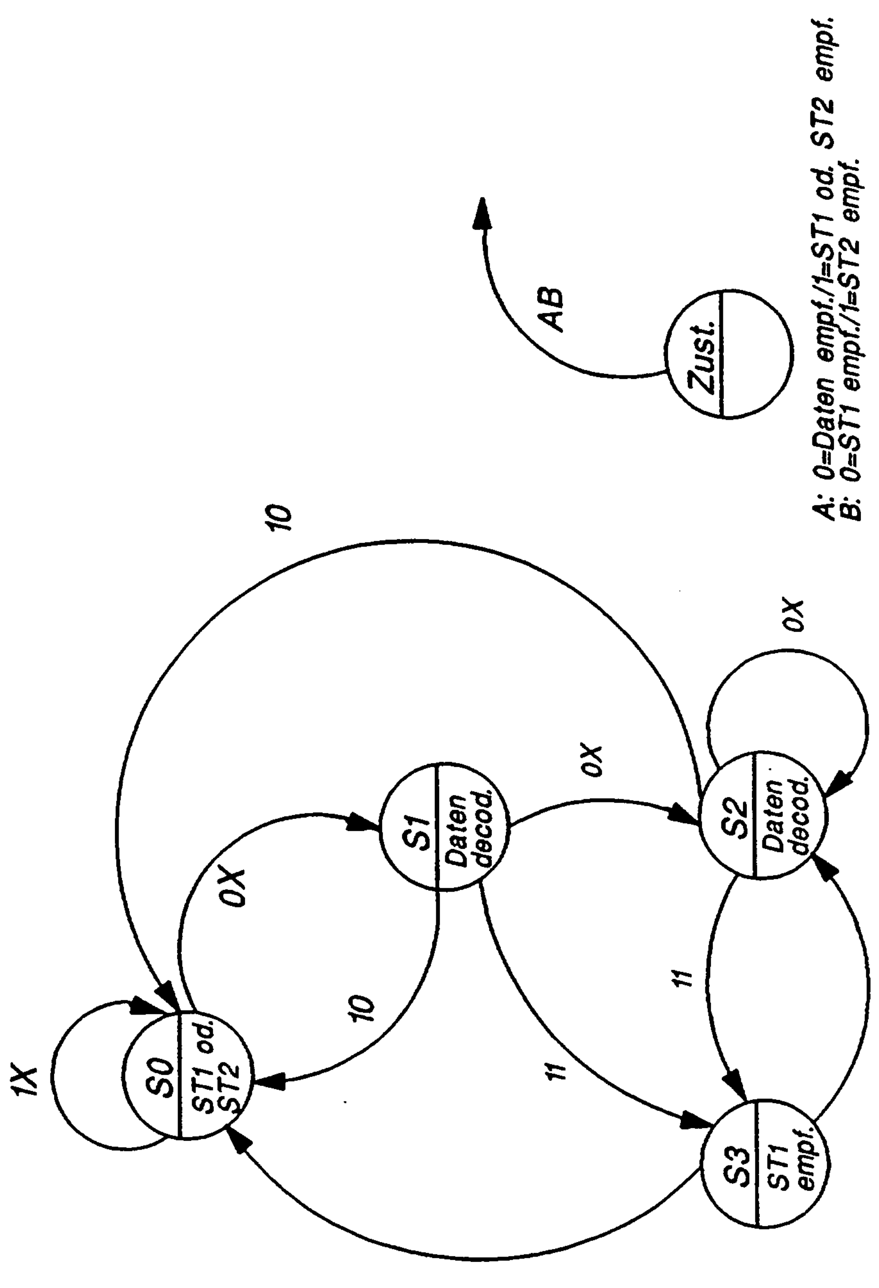
S0
ST1 od. ST2
S1
Daten decod.
S2
Daten decod.
S3
ST1 empf.
1X
0X
10
11
0X
10
0X
11
0X
1X
Zust.
AB
A: 0=Daten empf./1=ST1 od. ST2 empf.
B: 0=ST1 empf./1=ST2 empf.

Fig.5

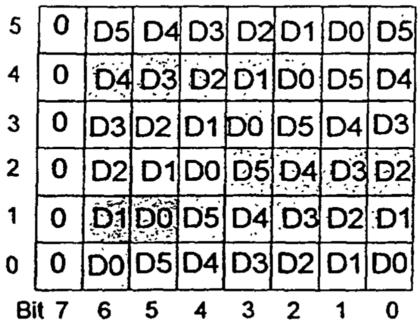


*Fig. 6*

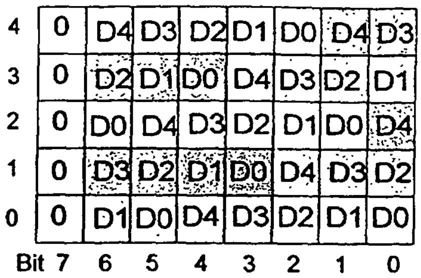


*Fig. 7*

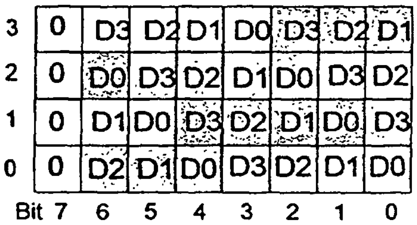


*Fig. 8*

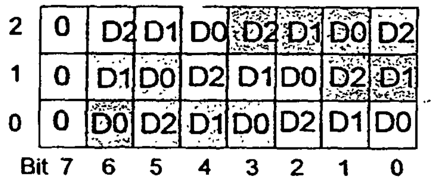


*Fig. 9*

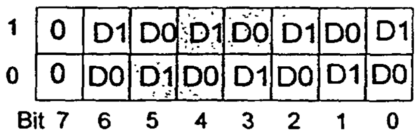


*Fig. 10*

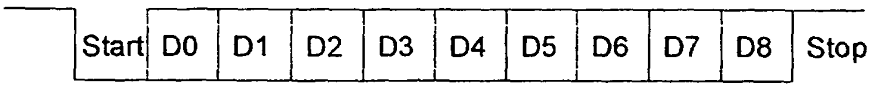


*Fig. 11*